# DEMANDE DE BREVET EUROPEEN

(11) **EP 0 872 185 A1**
(43) Date de publication de la demande: **21.10.1998**
(21) Numéro de dépôt: 97870050.8
(22) Date de dépôt: 15.04.1997
(51) Int. Cl.: A22C 13/00, A22C 17/14

(54) **Procédé pour la préparation de boyaux destines à la charcuterie et dispositif pour sa mise en oeuvre**

(71) Demandeur: Houti, Mohamed, 6061 Montignies-sur-Sambre (BE)
(72) Inventeur: Houti, Mohamed, 6061 Montignies-sur-Sambre (BE)
(74) Mandataire: Van Malderen, Michel

(57) **Abrégé**

La présente invention concerne un procédé d'enfilage d'un boyau sur un moyen support faisant office de gaine comprenant les étapes suivantes :
- le boyau (4) est enfilé à partir d'une première extrémité (3) d'un tube creux (2) dans lequel a été introduit un moyen support (6) par l'extrémité (5) opposée à la première extrémité (3) du tube creux (2),
- tout en retirant ledit moyen support (6) par la première extrémité (3) du tube creux (2), on transfère ledit boyau (4) sur le moyen support (6) et
- on recueille le moyen support (6) sur lequel est transféré le boyau (4).

La présente invention concerne également le dispositif pour la mise en oeuvre dudit procédé.

## Description

### Objet de l'invention

La présente invention se rattache au secteur technique de la boyauderie et a pour objet un procédé pour la préparation de boyaux naturels en charcuterie, un dispositif pour la mise en oeuvre de ce procédé ainsi que les éléments utilisés dans ladite mise en oeuvre.

### Arrière-plan technologique et état de la technique à la base de l'invention

Les enveloppes naturelles de saucisses sont préparées à partir d'intestins d'animaux qui sont des tubes extrêmement minces, fragiles et pliables constitués de fibres animales. Ces boyaux doivent être préservés en masse salée ou en saumure et doivent résister au transport avant d'être utilisés par le boucher et d'être enfilés sur une canule d'embossage pour la préparation de saucisses. Lesdits boyaux sont généralement livrés au boucher préassemblés sur des gaines souples ou des tubes rigides avant leur transfert sur la canule d'embossage.

La demande de brevet FR-1 320 867 décrit un conduit de guidage sur lequel sont disposés un ou plusieurs tubes faisant office de gaine sur lesquels seront ensuite enfilés les boyaux par des moyens d'entraînement mécaniques (moulinets montés de part et d'autre de l'extrémité libre du conduit sur deux arbres entraînés en rotation en sens inverse l'un de l'autre).

La demande de brevet FR-2 539 959 décrit un conduit dans lequel est introduit à une de ses extrémités une gaine formant protubérance à l'extrémité du conduit. On enfile ensuite par la même extrémité sur ledit conduit le ou les boyaux. Ceux-ci seront ensuite engagés sur la gaine en effectuant le retrait de celle-ci en tirant sur l'extrémité faisant saillie du conduit.

Les boyaux présentés sur ces gaines constituées de supports plastiques de différentes formes et dimensions permettent ensuite la pose aisée du boyau sur l'extrémité de la canule avant l'étape d'embossage.

Différents types de supports plastiques ont été proposés comme support pour le boyau. Celui-ci peut consister en une gaine souple en polyéthylène qui possède un prédécoupage longitudinal permettant de retirer la gaine plus aisément lors du positionnement du boyau sur la canule. Cependant, les gaines souples proposées présentent le risque d'abîmer le boyau lors du retrait de la gaine.

La demande de brevet FR-2 683 978 décrit une gaine constituée de une ou plusieurs bandes souples de forme généralement oblongue, dont les deux côtés opposés longitudinaux sont rectilignes, et présentent chacune une nervure, saillie ou une rainure creuse, éléments mâles et femelles complémentaires d'une fermeture longitudinale par pression susceptible d'être ouverte et fermée plusieurs fois.

Néanmoins, une telle gaine support est de structure particulièrement complexe, ce qui risque d'occasionner des défauts au niveau de sa fabrication, et d'en augmenter considérablement le coût.

Dans la demande de brevet FR-2 687 546, on décrit un moyen support faisant office de gaine en matière plastique rigide mais déformable, ouverte à ses deux extrémités par une languette, et présentant une forme vue en coupe de "haricot", c'est-à-dire qu'elle est plate et légèrement creusée tout en présentant sur une de ses extrémités une fente longitudinale.

Cependant, une telle gaine présente l'inconvénient qu'elle doit être introduite pièce par pièce sur un tube support pour permettre ensuite l'enfilage des boyaux.

Par conséquent, l'inconvénient majeur des dispositifs, gaines et procédés de l'état de la technique est la complexité de leur mise en oeuvre, qui amène une énorme perte de temps et empêche toute automatisation des différentes opérations qui restent longues, fastidieuses et coûteuses.

### Buts de l'invention

Le but de la présente invention est de fournir un nouveau procédé et dispositif pour la pose de boyaux sur des moyens support ainsi que ledit moyen support qui ne présenteraient pas les inconvénients de l'état de la technique.

Un autre but de la présente invention est de fournir un procédé, un dispositif et des éléments pour la mise en oeuvre de ce procédé qui permettent l'automatisation de l'enfilage de boyaux sur des moyens support, adaptables en fonction de tout type de boyau ou de moyen support et permettant avantageusement de quantifier la quantité de boyau enfilée sur le moyen support, tout en réduisant les dommages susceptibles d'affecter les boyaux recouvrant les moyens support.

### Eléments caractéristiques de l'invention

La présente invention concerne un procédé d'enfilage d'un boyau sur un moyen support faisant office de gaine, ledit procédé comprenant les étapes suivantes :
- le boyau est enfilé à partir d'une première extrémité d'un tube creux dans lequel a été introduit un moyen support par l'extrémité opposée à la première extrémité du tube creux,
- tout en retirant ledit moyen support par la première extrémité du tube creux (par laquelle a été enfilé ledit boyau), on transfère le boyau sur le moyen support et
- on recueille le moyen support sur lequel est transféré le boyau.

La seconde étape de ce procédé assure le transfert aisé du boyau enfilé sur le tube creux, sur le moyen support sans occasionner de perte de temps ou provoquer des dommages au boyau. Cette opération de transfert est également un "enfilage" du boyau sur le moyen support.

Selon l'invention, on entend par "enfilage" du boyau sur le tube creux (ou sur le moyen support), faire glisser ledit boyau sur la surface extérieure du tube creux (ou du moyen support).

Un tel procédé permet une automatisation de l'enfilage du boyau sur le tube creux, et l'introduction dans ledit tube creux du moyen support.

Il est également possible d'incorporer avant, pendant ou après ces différentes étapes des étapes supplémentaires de traitement du boyau ou du moyen support, consistant en une ou plusieurs étapes de découpage, marquage, lubrification, collage, etc. du boyau et/ou du moyen support.

Par rapport aux procédés de l'état de la technique, l'introduction du moyen support dans le tube creux par une extrémité opposée à la première extrémité sur laquelle est enfilée ledit boyau permet une meilleure optimalisation des différentes étapes du procédé de production selon l'invention, ce qui se traduit par des gains de temps et un meilleur contrôle de qualité des produits obtenus.

Avantageusement, le moyen support est introduit une seule fois dans le tube creux au cours du procédé d'enfilage. En d'autres mots, dans le procédé de l'invention, il n'est pas nécessaire, au cours du procédé, d'incorporer plusieurs fois et en fonction du type et de la longueur de boyau, différents moyens supports pour ledit type de boyau. En effet, dans le procédé de l'invention, on utilise un seul moyen support qu'il suffira simplement de découper avant de le retirer du tube creux et de transférer sur celui-ci le boyau.

Dans le procédé de l'invention, préalablement à l'enfilage sur le tube creux, le boyau, ou des portions de ce boyau, peut être traité, mesuré, lubrifié, calibré et/ou collé, de manière à ce qu'il soit adapté au moyen support sur lequel il sera enfilé.

Dans ledit procédé de l'invention, l'enfilage du boyau sur le tube creux et son transfert sur le moyen support peuvent s'effectuer manuellement ou par des moyens d'entraînement connus en soi.

La présente invention concerne également le dispositif pour la mise en oeuvre dudit procédé caractérisé en ce qu'il comporte, disposé sur un châssis éventuellement mobile, un tube creux dont une des extrémités est adaptée pour l'introduction d'un moyen support et dont l'autre extrémité est adaptée pour l'enfilage de boyaux.

Ledit tube creux, dénommé également "tube d'enfilage" est en acier inoxydable traité et poli sur ses deux faces intérieure et extérieure afin de faciliter la glisse et l'enfilage sur la surface extérieure du boyau et la glisse et la pénétration dans sa cavité intérieure du moyen support.

La première extrémité du tube creux présente une section de forme aplatie, de manière à faciliter la pose et l'enfilage du boyau.

Avantageusement, cette extrémité présente également une découpe en forme de U évasé sur sa face inférieure.

De manière avantageuse, l'extrémité du tube creux peut également comporter une pièce de protection ayant la forme d'un buse conique dans laquelle une ouverture pour le passage d'un lubrifiant, de préférence liquide tel que de l'eau, a été pratiquée.

De manière avantageuse, cette première extrémité du tube creux comporte une pièce de protection ayant la forme d'une buse conique, dans laquelle une ouverture pour le passage d'un lubrifiant tel que de l'eau a été pratiquée. La forme conique de ladite pièce de protection permet l'enfilage aisé des boyaux sur le tube creux.

De manière avantageuse, ledit tube creux ou tube d'enfilage comporte également à l'extrémité opposée une ouverture de forme conique, de manière à faciliter l'introduction et/ou le pliage du moyen support dans ledit tube creux.

Avantageusement, le tube creux comporte également un dispositif d'alimentation en un lubrifiant, de préférence liquide, tel que de l'eau, permettant de maintenir un filet de lubrifiant constant à l'intérieur du tube creux, ce qui facilite l'introduction et le passage du moyen support à l'intérieur de celui-ci.

En outre, le tube creux comporte également un guide soudé dans ladite ouverture de forme conique permettant de faciliter l'introduction et/ou le pliage du moyen support dans ledit tube creux et assurant que le lubrifiant puisse s'écouler par une ouverture pratiquée dans ledit tube creux sans que cette ouverture soit obstruée par le moyen support introduit dans ledit tube creux.

Le dispositif selon la présente invention comporte également des moyens d'entraînement connus en soi permettant l'enfilage aisé du boyau sur le tube creux et sur le moyen support, et éventuellement des moyens d'entraînement du moyen support dans le tube creux.

De manière avantageuse, le moyen support est prédécoupé et enroulé sur une bobine, de manière à réduire l 'encombrement.

La disposition du moyen support prédécoupé, fixé sur une bobine, garantit l'introduction en continu du moyen support dans le tube creux et facilite l'automatisation du procédé de l'invention.

Le moyen support est de préférence une gaine prédécoupée en différents tronçons en forme de demi-lune, ce qui permet avantageusement de distinguer l'extrémité antérieure et postérieure dudit moyen support.

Le dispositif selon la présente invention comporte également différents moyens de lecture de la quantité (longueur) de boyau et de moyen support utilisée, permettant de définir les longueurs de boyaux préparées, la quantification des pertes, etc.

Avantageusement, le moyen support est une gaine ayant une forme plissée de type "accordéon", de préférence légèrement bombé, et comportant une ouverture latérale sur toute sa longueur. Ledit moyen support pouvant être plié sur lui-même en forme de V ou de Z. Ledit moyen support pouvant être également une gaine plate simplement prédécoupée en forme de demi-lune et pouvant être repliée sur elle-même en forme de V ou de Z avant son introduction dans le tube creux.

Une telle forme permet de faciliter le passage des moyens supports dans le tube creux, permet son adaptation à différents calibres de boyaux, tout en assurant son irrigation et donc, la prolongation de la conservation du boyau.

La présente invention sera décrite plus en détails en référence à une forme d'exécution préférée de l'invention décrite ci-dessous à l'aide des figures annexées.

### Brève description des figures

- La figure 1: représente de manière schématique le dispositif selon la présente invention.
- Les figures 2 à 4: représentent des vues schématiques en coupe d'une des extrémités du tube creux du dispositif selon l'invention.
- Les figures 5 et 6: représentent des vues schématiques de l'autre extrémité du tube creux du dispositif selon la présente invention sur laquelle est éventuellement emboîtée une buse de forme conique.
- La figure 7: représente l'étape d'enfilage du boyau sur le tube creux dans le dispositif selon la présente invention.
- Les figures 8 et 9: représentent l'étape de transfert du boyau sur le moyen support selon l'invention.
- La figure 10: représente une vue schématique du moyen support prédécoupé en forme de demi-lune.
- La figure 11: représente une vue schématique du moyen support selon l'invention.
- La figure 12: représente une vue schématique de le dispositif pour la préparation d'une gaine selon l'invention.

### Description d'une forme d'exécution préférée de l'invention

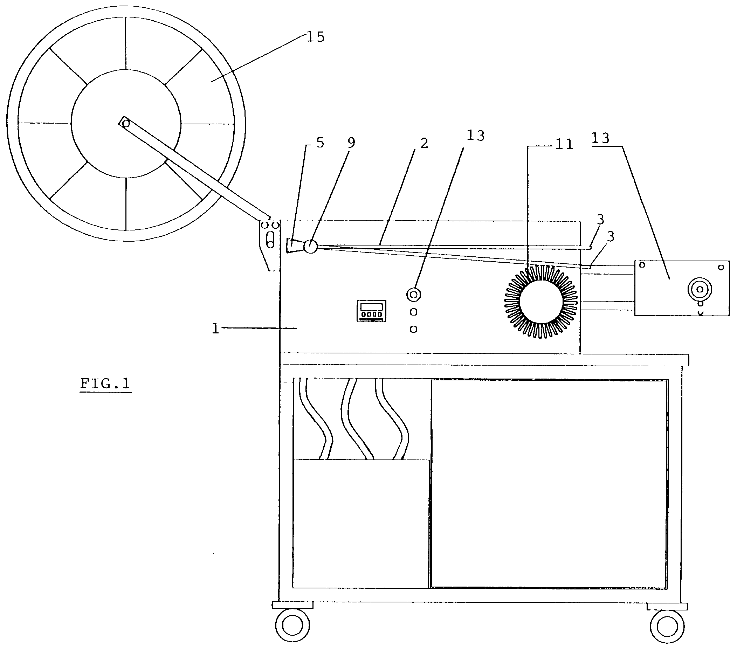

Le dispositif, représenté de manière schématique sur la figure 1 annexée, comprend, disposé sur une châssis 1, un tube creux 2 dont une première extrémité 3 est adaptée pour l'enfilage de boyaux et dont l'autre extrémité 5 est adaptée pour l'introduction d'un moyen support 6 faisant office de gaine.

Dans cette figure 1, on a représenté le tube creux 2 mobile dans deux positions différentes, c'est-à-dire en contact ou non avec une roue d'entraînement 11.

La fixation du tube creux 2 sur le châssis 1 du dispositif de l'invention se fait via une pièce filetée 9 fixée sur le châssis 1. Le déplacement du tube 2 par rapport au châssis 1 étant limité de manière avantageuse (entre les deux positions, tel que représenté dans la figure 1) par un dispositif 25 (tel qu'un ressort) reliant la pièce filetée 9 au châssis 1 ou à une pièce métallique 26 soudée sur le châssis 1.

Les deux positions du tube creux sont déterminées par l'utilisateur en fonction de l'opération effectuée (enfilage de l'extrémité du boyau sur le tube creux, déplacement du boyau et formation des plis, transfert du boyau sur le moyen support, position arrêt de la machine, etc.).

De manière avantageuse, la pièce filetée 9 est mise en contact avec un dispositif de lubrification 14 qui assure le déplacement du lubrifiant à l'intérieur de la pièce filetée 9 et son écoulement par l'ouverture 16 dans le tube creux 2.

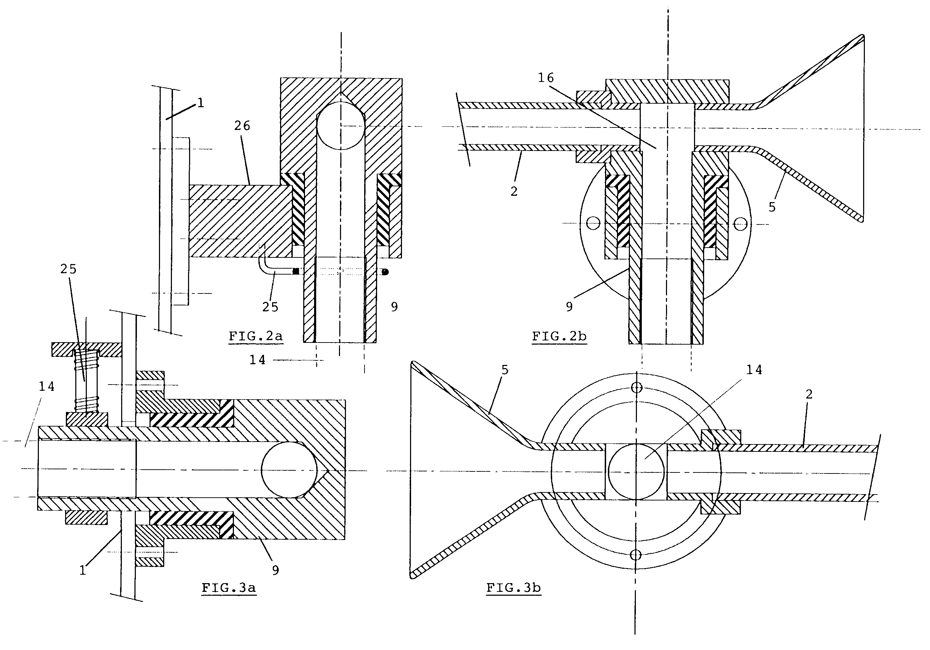

Les figures 2 et 3 représentent deux formes d'exécution différentes du mode de fixation de la pièce filetée 9 sur le châssis 1. Ce type de fixation permet avantageusement le changement rapide de tubes creux de différents diamètres adaptés selon le type de boyau ou de moyen support utilisé.

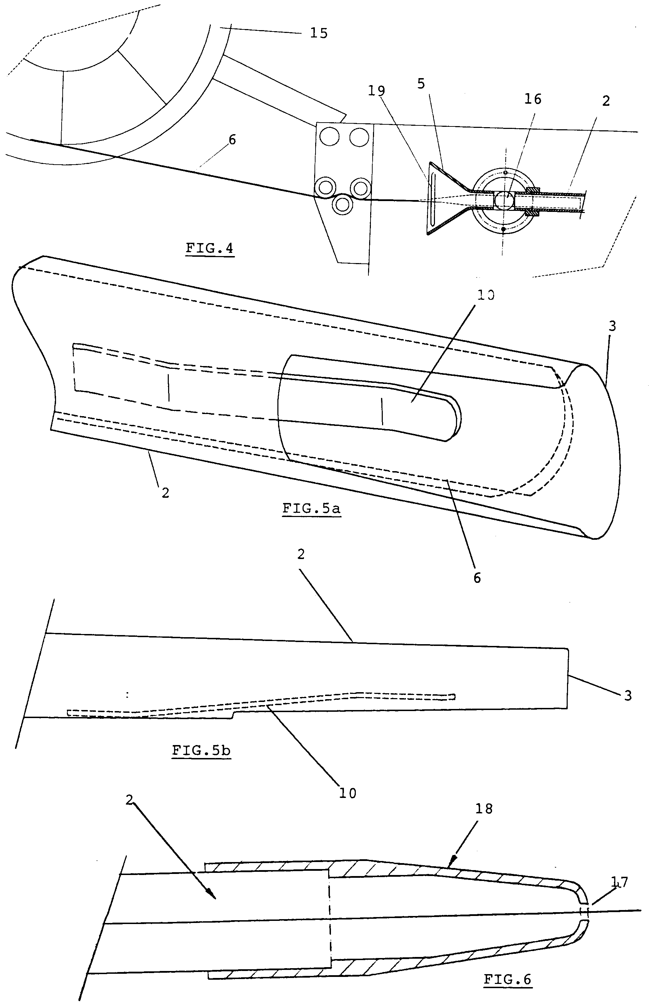

La première extrémité 3 du tube creux 2 est progressivement et légèrement aplatie afin de faciliter le contact du boyau avec la roue d'entraînement Il et d'éviter le chevauchement des plis. Une découpe en forme de U (figure 5a) évasé sur sa face inférieure est effectuée sur la première extrémité 3 du tube creux 2 selon les caractéristiques suivantes :
- Une ouverture agrandie en U de l'extrémité 3 permet à l'opérateur un retrait grandement facilité du moyen support 6 lors de l'opération de transfert du boyau 4 sur le moyen support 6.
- La visibilité de l'extrémité du moyen support 6 assure sa présence dans le tube creux 2 lors d'une automatisation de la production via une sonde ou un capteur de présence (non représenté).
- Le moyen support 6 ne sort jamais du tube creux 2 lors de l'enfilage du boyau 4 sur l'extrémité 3 du tube creux 2 et garantit que les boyaux 4 ne seront pas abîmés.

En outre, un moyen de fixation et/ou de découpe du moyen support 6, par exemple constitué par une lame ressort 10, est fixé à l'intérieur du tube creux 2. Une légère pression de la lame ressort 10 sur la gaine 6 assure son découpage (voir figure 5).

Le dispositif selon l'invention comprend également des moyens de mesure de la quantité de boyau et/ou de moyen support utilisée dans le dispositif de l'invention. Celui-ci peut, par exemple, être un métreur 13 constitué d'un ensemble roue, guides et frein permettant de mesurer les quantités de boyau enfilées. La commande s'effectue via un compteur électronique programmable en fonction des longueurs désirées par le client. Il permet un comptage journalier des entrées et sorties de la marchandise de chaque poste de travail et assure ainsi une quantification des pertes.

Le dispositif de lubrification 14 comprend un système d'alimentation en lubrifiant (eau) permettant de maintenir un filet de lubrifiant constant à l'intérieur du tube creux qui facilite l'introduction et le passage du moyen support 6 à l'intérieur de celui-ci. Le lubrifiant s'écoule à partir d'une ouverture 16 pratiquée dans le tube creux 2 au niveau de l'extrémité 5 par laquelle est introduit le moyen support 6 et le lubrifiant s'écoule depuis cette ouverture à l'intérieur du tube creux par la première extrémité 3 sur laquelle est enfilée le boyau 4 ou l'ouverture 17 de la buse de protection 18 disposée sur cette extrémité (figures 5 et 6).

Ce lubrifiant s'écoulant sur le boyau pendant l'étape d'enfilage sur le tube creux facilite le glissement du boyau sur la surface extérieure dudit tube creux.

L'autre extrémité 5 du tube creux 2 comporte de préférence une ouverture de forme conique qui facilite l'introduction du moyen support selon l'invention (figure 4).

Le tube creux 2 comporte également un guide 19 constitué par une tige soudée dans l'ouverture de l'extrémité 5 du tube creux 2. Ce guide 19 facilite l'introduction et le pliage du moyen support 6 dans le tube creux 2, empêche l'obstruction par le moyen support 6 de l'ouverture 16 et assure ainsi l'écoulement du lubrifiant dans le tube creux 2 et une glisse parfaite du moyen support 6.

D'autre part, le dispositif de l'invention comporte des moyens de lubrification de la surface intérieure et extérieure du tube creux. Ces moyens permettent notamment la lubrification par un lubrifiant liquide oléagineux ou non de la surface extérieure du tube creux, de manière à faciliter la glisse du boyau sur celui-ci lors de l'enfilage.

Le dispositif de l'invention comprend notamment un bac en inox amovible muni d'un capteur de niveau. Le lubrifiant est aspiré par une pompe et introduit à l'intérieur du boyau préalablement à l'enfilage de celui-ci sur le tube creux.

Le dispositif de l'invention comprend également un moyen d'entraînement 11 permettant la glisse du boyau sur le tube creux. Ce moyen peut par exemple consister en une roue d'enfilage 11 montée directement sur un arbre moteur constitué d'une pièce en matière plastique dur sur laquelle vient se fixer une roue en caoutchouc constituée d'ailettes 12 uniformément réparties. Ces ailettes 12 facilitent un enfilage constant du boyau 4 sur le tube creux 2 sans chevauchement des plis et évite toute détérioration du boyau.

Ledit moyen d'entraînement peut être conçu de manière à être entraîné par le même moteur ou par des moteurs différents, travaillant éventuellement pour différents postes de travail montés sur le même châssis.

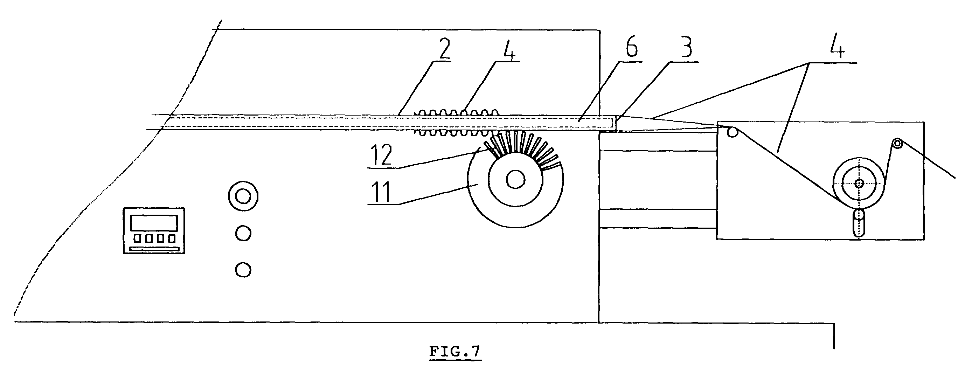

Le dispositif de l'invention permet de faciliter avantageusement les étapes d'enfilage et de transfert du boyau 4. Ces différentes étapes sont représentées dans les figures 7 à 9.

Dans une première étape, le boyau 4 est enfilé à partir d'une première extrémité 3 du tube creux 2 dans lequel a été introduit le moyen support 6 par l'extrémité 5 opposée à la première extrémité 3 du tube creux 2 (figure 7).

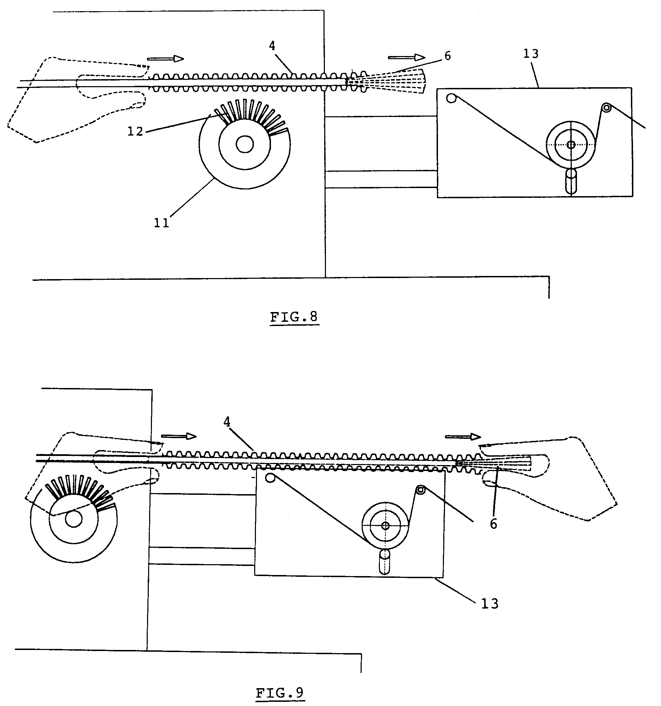

Ensuite, tout en retirant ledit moyen support 6 du tube creux 2 par la première extrémité 3 du tube creux (par laquelle a été enfilé ledit boyau 4) (figure 8), on effectue l'étape de transfert du boyau 4 sur le moyen support 6 (par l'enfilage du boyau sur ledit moyen support) et on recueille le moyen support 6 sur lequel a été transféré le boyau 4. Cette opération s'effectue en poussant le boyau 4 de manière à l'enfiler sur le moyen support 6 (figure 9).

Préalablement à l'étape de transfert, on peut effectuer une pression, de préférence manuelle, sur le moyen de fixation et/ou de découpe 10 du moyen support 6. Par cette pression, il est possible de détacher un tronçon prédécoupé du moyen support 6, de manière à transférer le boyau 4 sur un tronçon déterminé. Cette opération peut être effectuée directement par l'artisan ou de manière automatisée.

On entend par "moyen support faisant office de gaine" tout type de support en matière plastique, matériau composite et/ou en métal, sur lequel on peut enfiler les boyaux sans risquer de les endommager. Lesdits supports sont, de préférence, réalisés en matière plastique de différentes formes et dimensions qui permettent ensuite la pose aisée du boyau sur l'extrémité d'une canule avant l'étape d'embossage.

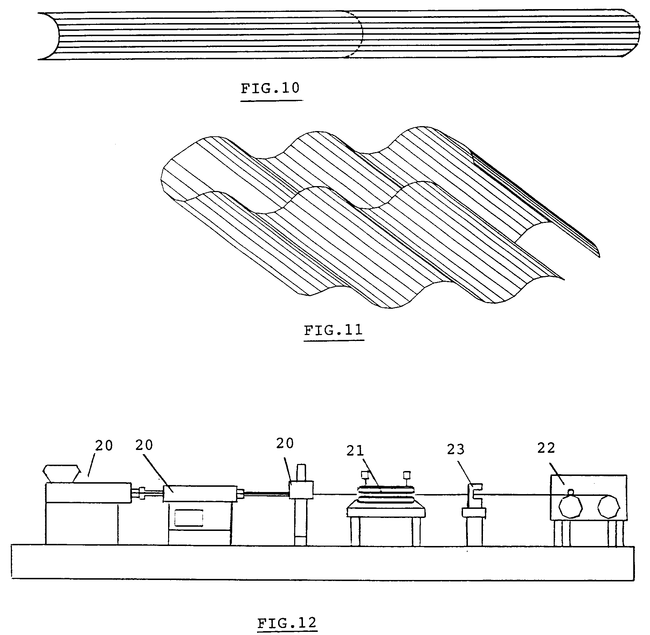

Ainsi que représenté à la figure 10, afin d'effectuer la séparation des différents tronçons de gaine, on utilise un moyen support constitué d'une gaine prédécoupée en forme de demi-lune lors de sa fabrication afin de distinguer l'avant de l'arrière dans l'étape d'enfilage du boyau sur ladite gaine.

La gaine peut prendre plusieurs formes. Cette gaine peut notamment être plate, de préférence prédécoupée en forme de demi-lune.

Le moyen support de l'invention est une gaine souple en polyéthylène qui possède une ouverture longitudinale permettant de retirer la gaine plus aisément lors du positionnement du boyau sur la canule (figure 11).

De préférence, le moyen support utilisé dans le dispositif et le procédé selon l'invention est une gaine enroulée sur une bobine 15, prédécoupée et prête à l'emploi.

La figure 11 représente un moyen support selon l'invention constitué par une gaine creuse de forme légèrement bombée et rainurée en forme d'accordéon sur toute sa longueur. Les avantages de cette forme de la gaine sont les suivants :
- faciliter le passage dans le tube,
- prendre les différents calibres des boyaux,
- faciliter l'irrigation, et donc prolonger la conservation du boyau,
- soutenir le boyau sur la gaine de manière à ce que les plis restent perpendiculaires à la gaine et ne glissent pas.

Ladite gaine est ouverte sur toute sa longueur afin que, lors de l'étape d'embossage, son retrait de la canule soit facilité après avoir déposé le boyau dessus sans abîmer ledit boyau et sans effort pour enlever ladite gaine.

La qualité de la matière plastique de la gaine utilisée a un très bon coefficient de glissement ce qui permet un retrait facile du boyau.

Le moyen support selon l'invention est avantageusement plié sur lui-même en forme de V ou de Z et introduit, plié en V ou en Z, dans le tube creux selon le procédé de l'invention.

La figure 12 représente le dispositif pour la production d'un moyen support tel que la gaine selon l'invention. Un tel dispositif comprend notamment une extrudeuse 20, une chenille de tirage 21 afin d'incorporer sur une bobineuse 22 la gaine ainsi obtenue.

Le dispositif peut également comporter un dispositif de prédécoupe 23 (prédécoupage en forme de demi-lune) du moyen support.

Le moyen support selon l'invention est obtenu par différentes étapes adaptables par l'homme du métier en fonction de la longueur et du calibre de la gaine à préparer.

Selon une forme particulière de l'invention, préalablement à leur enfilage sur le tube creux, les boyaux sont assemblés par un procédé de collage avec une colle alimentaire de type protéique afin d'éviter les pertes de temps pendant la manipulation des morceaux de boyau lors de l'enfilage et de manière à faciliter le travail. Cette colle peut être composée par exemple de Carboxy-Methyle-Cellulose (CMC) ou par de l'amidon hydrolysé. Cet amidon est de préférence dilué dans de l'eau chaude (90 °C) et utilisé en concentration élevée (30 à 40 % de matière sèche) donnant un effet collant en refroidissant. Un tel produit est, par exemple, celui vendu sous la marque THIBOLA 100® commercialisé par la firme AMYLUM.

La présente invention concerne donc également le boyau constitué de tronçons de boyau dont des portions peuvent éventuellement être superposées. En outre, ce boyau peut être constitué de tronçons de boyau précollés par de l 'amidon hydrolysé ou du Carboxy-Methyle-Cellulose (CMC).

## Revendications

1. Procédé d'enfilage d'un boyau sur un moyen support faisant office de gaine comprenant les étapes suivantes :
- le boyau (4) est enfilé à partir d'une première extrémité (3) d'un tube creux (2) dans lequel a été introduit un moyen support (6) par l'extrémité (5) opposée à la première extrémité (3) du tube creux (2),
- tout en retirant ledit moyen support (6) par la première extrémité (3) du tube creux (2), on transfère ledit boyau (4) sur le moyen support (6) et
- on recueille le moyen support (6) sur lequel est transféré le boyau (4).

2. Procédé selon la revendication 1 caractérisé en ce que l'on introduit une seule fois le moyen support (6) dans le tube creux (2) au cours du procédé.

3. Dispositif pour la mise en oeuvre du procédé selon la revendication l ou 2 caractérisé en ce qu'il comporte, disposé sur un châssis (1), un tube creux (2) comportant une première extrémité (3) adaptée pour l'enfilage de boyaux (4) et une seconde extrémité (5) adaptée pour l'introduction d'un moyen support (6) faisant office de gaine pour ledit boyau (4).

4. Dispositif selon la revendication 3 caractérisé en ce que la première extrémité (3) du tube creux (2) présente une section de forme aplatie.

5. Dispositif selon la revendication 4 caractérisé en ce que la première extrémité (3) du tube creux (2) présente une découpe en forme de U évasé sur sa face inférieure.

6. Dispositif selon la revendication 4 ou 5 caractérisé en ce que la première extrémité (3) du tube creux (2) comporte une pièce de protection (18) ayant la forme d'une buse conique comportant éventuellement à son extrémité une ouverture (17).

7. Dispositif selon l'une quelconque des revendications précédentes 4 à 6 caractérisé en ce que la deuxième extrémité (5) présente une ouverture de forme conique.

8. Dispositif selon l'une quelconque des revendications précédentes 4 à 7 caractérisé en ce que le tube creux (2) comporte un moyen de fixation et/ou de découpe (10) du moyen support (6), ledit moyen étant de préférence une lame ressort.

9. Dispositif selon l'une quelconque des revendications précédentes 4 à 8 caractérisé en ce qu'il comprend une bobine (15) sur laquelle est enroulé le moyen support (6).

10. Dispositif selon l'une quelconque des revendications précédentes 4 à 9 caractérisé en ce qu'il comporte un moyen de mesure de la quantité de boyau et/ou de moyen support utilisée.

11. Moyen support faisant office de gaine pour des boyaux, caractérisé en ce qu'il comporte une prédécoupe en forme de demi-lune.

12. Moyen support faisant office de gaine pour des boyaux selon la revendication 11, caractérisé en ce qu'il présente une forme plissée de type "accordéon", de préférence légèrement bombé, et comportant une ouverture latérale sur toute sa longueur.

13. Moyen support faisant office de gaine pour des boyaux selon la revendication 11 ou 12, caractérisé en ce qu'il est plié sur lui-même en forme de V ou en forme de Z.

14. Boyau caractérisé en ce qu'il est constitué de tronçons de boyaux, précollés par de l'amidon hydrolysé ou du Carboxy-Methyle-Cellulose.
